# EUROPÄISCHE PATENTSCHRIFT

(11) **EP 2 352 708 B1**
(45) Veröffentlichungstag und Bekanntmachung des Hinweises auf die Patenterteilung: **16.01.2013**
(21) Anmeldenummer: 09806001.5
(22) Anmeldetag: 30.11.2009
(51) Int. Cl.: C04B 28/24

(54) **VERBUNDWERKSTOFF, VERFAHREN ZUR HERSTELLUNG EINES FORMKÖRPERS UND VERWENDUNG DES VERBUNDWERKSTOFFS**
COMPOSITE MATERIAL, METHOD FOR PRODUCING A MOLDED BODY, AND USE OF THE COMPOSITE MATERIAL
MATÉRIAU COMPOSITE, PROCÉDÉ DE PRODUCTION D'UN CORPS MOULÉ ET UTILISATION DU MATÉRIAU COMPOSITE

(30) Priorität: 01.12.2008 DE 102008059770
(43) Veröffentlichungstag der Anmeldung: 10.08.2011
(73) Patentinhaber: NANO-X GmbH, 66130 Saarbrücken (DE); Schoeller Technocell GmbH & Co. KG, 49086 Osnabrück (DE)
(72) Erfinder: SEPEUR, Stefan, 66787 Wadgassen (DE); LARYEA, Nora, 66113 Saarbrücken (DE); TEXTER, Friederike, 32051 Herford (DE)
(74) Vertreter: Vièl, Christof
(86) Internationale Anmeldenummer: PCT/DE2009/075072
(87) Internationale Veröffentlichungsnummer: WO 2010/063284

(56) Entgegenhaltungen:
- DE-A1- 2 606 487
- DE-A1- 10 152 545
- DE-A1- 19 647 369
- DE-A1- 19 915 149
- GB-A- 1 175 760
- GB-A- 1 278 473

## Beschreibung

Die Erfindung betrifft ein Verfahren zur Herstellung eines Formkörpers und die Verwendung des Formkörpers.

Das Grundprinzip zurzeit verwendeter Hochleistungswärmedämmstoffe beruht auf dem Prinzip mikro, nano- und offenporöser Materialien. Die verwendeten Materialen (pyrogene Kieselsäure oder Aerogele) haben gemeinsam, dass zwischen einzelnen Feststoffteilchen nur Punktkontakte bestehen und die Porosität sehr fein und in alle Richtungen offen ist. Die Punktkontakte sind für die sehr niedrige Feststoff-Wärmeleitung verantwortlich (auch wenn der Werkstoff SiO₂ im Vergleich zu Kunststoffen selbst eine relativ hohe Wärmeleitung hat). Zusätzlich wird die Gasleitung durch die sehr feine (offene) Porosität stark beeinträchtigt, was zu einer weiteren Verringerung der Gesamtwärmeleitung des Materials führt. Eine weitere Verringerung der Wärmeleitfähigkeit dieser Dämmstoffe ist durch die Ausschaltung der Wärmeleitung über das Gas zu erzielen; dies entspricht dem Prinzip der Vakuumdämmstoffe. Nachteil dieser Technologie ist, dass die gasdichte Umhüllung sehr empfindlich gegenüber Beschädigungen ist, nicht bearbeitet (geschnitten oder durchbohrt) werden darf und deshalb nicht ohne weiteres für den Baubereich geeignet ist.

Organische Dämmstoffe auf der Basis von nachwachsenden Rohstoffen wie Zellulose werden aus zerfasertem Altpapier unter Zugabe von Borsalzen hergestellt. Durch das Borsalz erhält das Rohmaterial einen Brandschutz (Brandschutzklasse 2: normal entflammbar). Gleichzeitig wirkt Borsalz gegen Schimmel und Schädlingsbefall. Zellulosedämmstoff ist wiederverwertbar und deponierfähig, allerdings nicht kompostierbar. Die Zellulose wird z.B. in die Dämmschalung eingeblasen. Zellulosedämmstoff hat sehr gute Dämmeigenschaften, ist preiswert, ökologisch sehr empfehlenswert und eignet sich besonders gut für den Leichtbau. Die Dämmplatten sind sehr elastisch, jedoch nicht belastbar. Die Wasserstabilität ist insbesondere für den Außenbereich nicht ausreichend.

Rein anorganische Dämmstoffe, wie z.B. Schaumglas, werden unter relativ hohem Energieaufwand aus einer Glasschmelze hergestellt, zu der auch Altglas verwendet werden kann. Unter Zugabe von Kohlenstoff entsteht Gas, das die Schmelze zum Schäumen bringt. Schaumglas ist praktisch dampfdicht und nimmt keine Feuchtigkeit auf. Zu Platten oder Halbschalen zugeschnitten eignet sich das feuchtebeständige Material besonders im Außenbereich für Wände mit Kontakt zum Erdreich. Hier ist es die einzige Alternative zu den sonst üblichen Kunststoffdämmplatten. Das Material ist druckstabil, unbrennbar und schädlingssicher. Es hat eine vergleichsweise hohe Wärmeleitfähigkeit. Aufgrund seiner Sprödigkeit kann Schaumglas keine Punktlasten aufnehmen und muß deshalb plan aufliegen. Zudem ist der Energieaufwand bei der Herstellung hoch und das Material verklebt teilweise bei der Verarbeitung mit Bitumen.

Hochisolierende Wärmedämmstoffe auf anorganisch-organischer Basis sind Aerogel-Polymerkomposite, wobei als Polymerbestandteil z.B. PVB-, PU-, Polyolefin-, Epoxid-, Styrol- oder Melaminharze, Polysiloxane oder Faservliese aus Polyester oder Polyamid verwendet werden. Mit diesen Materialien wird jedoch auch nur ein eingeschränkter Brandschutz erreicht und der Feuchtigkeitstransport durch das Material ist eingeschränkt.

Die DE 103 60 749 A1 beschreibt ein Verfahren zur Herstellung einer Wärmedämmpaste, die aus Mikrohohlkugeln (Glas, Keramik), Fasern (mineralische Fasern oder Aramid), Bindemittel (Polysiloxan) und Netzmitteln besteht.

Die DE 195 16 186 A1 beschreibt ein Dämmmaterial aus Naturprodukten (Gemische z.B. aus Zellulose, Papier, Jute,...) und flammhemmenden Verbindungen wie z.B. Boraxverbindungen, Borsäure oder Aluminiumsulfat.

Die DE 196 18 444 A1 beschreibt einen schwer entflammbaren Zellulosedämmstoff aus Zellulosefasern, Brandschutzmitteln, Füllstoffen und Bindemitteln. Die Bindemittel können anorganischen oder organischen Charakter haben.

Die DE 196 47 369 A1 beschreibt einen Verbundwerkstoff auf der Basis von Glasfasern, Mineralwolle oder Holz, welcher getränkt wird mit einen Nanokomposit bestehend aus oberflächenmodifizierten anorganischen, kolloidalen Partikeln, die mit Silanen belegt sind und hydrolysiert und kondensiert werden.

Die DE 197 14 729 A1 beschreibt einen Dämmstoff aus Fasermaterial (anorganische, pflanzliche und tierische Fasern), das mit einem Bindemittel getränkt wird. Das Bindemittel kann z.B. Gips, Zement, zellulose- oder latexhaltige, organische oder anorganische (z.B. Wasserglas) Komponenten enthalten.

Die DE 10 2006 062 146 A1 beschreibt ein feuerfestes Verbundmaterial aus anorganischen Partikeln, die in einem Polymer, Oligomer oder Copolymer dispergiert sind. Korrespondierende funktionelle Gruppen der Partikeloberflächen und des Polymers reagieren miteinander zu einem festen Verbund. Als Additive können z.B. Silane, Siloxane, Flammschutzmittel, etc. zugesetzt werden.

Die DE 10 2007 019 416 A1 beschreibt ein Verfahren, bei dem einem zellulosehaltigen Material ein Schaumbildner, der vollständig oder teilweise zu einem Duromer vernetzen kann (Harnstoff, Melamin, Phenolharze,..) zugesetzt wird. Verwendet wird dieses Verfahren beispielsweise für die Herstellung von Span- oder Faserplatten.

Die DE 20 2005 021 201 A1 beschreibt einen Verbundwerkstoff für den Brandschutz, der hydrophobe Aerogelpartikel, anorganische Bindemittel (Zement, Gips, Lehm, Wasserglas,...) und ein Dispergiermittel (anorganisch) enthält.

Die GB 1 278 473 A beschreibt eine Feuerfest-Zusammensetzung auf Basis von 5-55 Gew.-% Kieselsol, 15 bis 38 Gew.-% Naturfasern sowie weiterem anorganischem Fasermaterial.

Die DE 26 06 487 A1 beschreibt ein Verfahren zur kontinuierlichen Herstellung von Formteilen aus anorganischen Fasern unter Anwendung von Vakuum, wobei die Fasern einem gründlichen Aufschluß unterzogen werden, die Fasern mit Kieselgel aufgeladen und dann mit anionischer Stärke ausgefällt werden, die Faserflocken kontinuierlich in homogener Verteilung auf ein Transportsieb aufgebracht werden und durch Vakuum unter Erzeugung einer endlosen weitertransportierbaren Faserbahn ohne wesentliche Walzendruckeinwirkung von oben entwässert werden und die Faserbahn gegebenfalls weiter verformt und dann einem Trockner zugeführt wird.

Ausgehend vom Stand der Technik besteht die Aufgabe der vorliegenden Erfindung darin, ein neues Verfahren zur Herstellung eines Verbundwerkstoffs zu schaffen, welcher die Vorteile der obengenannten einzelnen Stoffklassen kombiniert. Dazu zählen:
● hoher Wärmeschutz
● hohe Wärmespeicherfähigkeit
● geringes Wasseraufnahmevermögen bzw. Resistenz gegenüber Umwelteinflüssen (Chemikalien, Bakterienbefall, UV-Licht)
● Antimoos-, Antialgen- und antibakterielle Eigenschaften
● frei von Schwermetallen
● gute Schalldämmung
● schwere Entflammbarkeit, keine Brennbarkeit (Brandklasse A1, A2 nicht brennbar)
● keine Schadstofffreisetzung im Brandfall
● biologische Abbaubarkeit, Kompostierbarkeit, Recyclingfähigkeit oder Deponierbarkeit (gefahrlose Entsorgung)
● gewisse Elastizität
● Herstellung aus nachwachsenden Rohstoffen oder Recyclingstoffen
● gezielte Wärmeführung durch kontrollierte Wärmeauf- und Abgabe
● Formstabilität bzw. mechanische Festigkeit
● keine Verarbeitung von schädlichen Fasern und Stäuben
● gute Verarbeitungsfähigkeit als Plattenware bzw. beliebig geformte Teile
● Schaffung einer mikro- oder nanoporigen Struktur.

Diese Aufgabe wird durch ein Verfahren zum Herstellen eines Formkörpers mit den folgenden Verfahrensschritten gelöst:
a. Herstellen einer Mischung, enthaltend 20 bis 80 Gew.-% eines ersten faserigen Naturstoffs und 10 bis 60 Gew.-% silikatisches Bindemittel, wobei das silikatische Bindemittel aus 90-100 Gew.-% eines Gemisches von 40 bis 95 Gew.-% SiO₂-Partikeln, 5 bis 60 Gew.-% hydrolysiertem Tetraethoxysilan (TEOS) und bis zu 10 Gew.-% Methyltriethoxysilan (MTEOS) besteht, sowie bis zu 10 Gew.-%, vorzugsweise bis zu 20 Gew.-% und höchst vorzugsweise bis zu 30 Gew.-%, eines von dem ersten faserigen Naturstoff verschiedenen zweiten faserigen Materials,
b. Zugabe eines Treibmittels, und/oder Zugabe von Hohlkugeln zu der Mischung,
c. Eintrag der Mischung in eine Form, auf eine Oberfläche oder auf ein umlaufendes Band,
d. thermische Behandlung bei Temperaturen von Raumtemperatur bis 400°C, bevorzugt von Raumtemperatur bis 250°C.

In der gesamten vorliegenden Anmeldung sind die Angaben in Gew.-% jeweils bezogen auf die jeweilige Gesamtmasse, hier also auf die Gesamtmasse des Verbundstoffs.

Es wird auf diese Weise ein Verbundwerkstoff auf organischer Basis geschaffen, der die oben genannten Anforderungen erfüllt und insbesondere aufgrund der geschlossenen Hohlräume exzellente Dämmeigenschaften aufweist. Die geschlossenen Hohlräume können beliebige Formen aufweisen, beispielsweise als längliche Kammern oder als kugelförmige Hohlräume ausgebildet sein.

Es hat sich im Rahmen der Erfindung herausgestellt, dass Hohlräume mit einer Länge bzw. einem Durchmesser von 2 bis 100 nm sowohl in Hinblick auf die Schalldämmung als auch in Hinblick auf die Wärmedämmung besonders vorteilhaft sind.

Erfindungsgemäß ist vorgesehen, dass das silikatische Bindemittel ein Gemisch anorganischer Silikatverbindungen enthält.

Es liegt im Rahmen der Erfindung, dass nach Schritt c. Druck auf die eingetragene Mischung ausgeübt wird. Der Druck muß ausreichend groß sein, um überschüssiges Wasser bzw. überschüssigen Restalkohol forciert zu entfernen.

Der Auftrag der Mischung in die Form kann durch Spritzen, Gießen, Spritzgießen, Rakeln oder über andere geeignete Verfahren erfolgen.

Weiterhin ist zur Erfindung gehörig, dass die thermische Behandlung mittels IR-Strahlen, Mikrowellenstrahlung, Induktion oder Konduktion erfolgt.

Eine Weiterbildung der Erfindung besteht darin, dass der Schritt d. im Vakuum erfolgt.

Es ist zweckmäßig, dass nach Schritt d. die Oberfläche des Verbundwerkstoffes mit Klarlack oder Farblack lackiert wird oder mit Papier oder Kunststoffen überlaminiert wird.

Der Verbundwerkstoff kann bis zu 85 Vol.-% Hohlräume aufweisen.

Es liegt im Rahmen der Erfindung, dass die Hohlräume durch ein Aufschäumen mit einem Treibmittel oder durch den Einbau von Hohlkugeln, insbesondere aus Glas oder aus Kunststoff, ausgebildet sind.

Das Aufschäumen kann durch eine der folgenden Treibmethoden erfolgen:
● Treibgas aus einer chemischen Reaktion von Reaktionspartnern
● Treibgas aus einer chemischen Zersetzung eines Treibmittels (anorganische oder organische Verbindung, die sich unter Wärmeeinwirkung zersetzen und gasförmige Spaltprodukte wie N2, CO2, NH3, etc. freisetzen
● Einmischen von Treibmitteln in die Masse (physikalische Treibmittel, wie Gase oder niedrig siedende Flüssigkeiten, die in der Masse homogen verteilt bzw. gelöst werden und durch ihren Dampfdruck bei der Druckentspannung das Aufschäumen bewirken).

In diesem Zusammenhang ist vorgesehen, dass der erste faserige Naturstoff ein Naturstoff auf Zellulosebasis, insbesondere Zellulosepulp oder -vlies, Papier, recyceltes Papier, Pappe, recycelte Pappe, Holz oder recyceltes Holz ist.

Es ist erfindungsgemäß vorgesehen, dass das silikatische Bindemittel ein organisches silikatisches Bindemittel, vorzugsweise ein Gemisch anorganischer Silikatverbindungen, enthält.

Die verwendeten Bindemittel werden vorzugsweise hergestellt
● auf Basis des Sol-Gel-Prozesses ("Sol-Gel-Science" The Physics and Chemistry of Sol-Gel Processing, C. Brinker - Georg W. Scherer),
● über das Fällung-Emulsions-Verfahren (WO 2002/050191 A1),
● aus Silikonharzen mit geringem organischem Anteil,
● auf der Basis von MTEOS (EP 1 484 372 A1)
● auf der Basis von TEOS bzw. TEOS/MTEOS-Gemischen und SiO₂-Partikeln.

Zur Erfindung gehörig ist auch, dass das silikatische Bindemittel bis zu 10 Gew.-% Glycidyl-oxypropyl-3-triethoxysilan (GPTS) und/oder Aminosilan enthält.

Es ist zweckmäßig, dass das silikatische Bindemittel wasserbasiert ist und einen Alkoholgehalt (z.B. Ethanol, Methanol oder Isopropanol) von weniger als 30 Gew.-%, bevorzugt von weniger als 10 Gew.-% und besonders bevorzugt von weniger als 5 Gew.-% aufweist.

Erfindungsgemäß ist vorgesehen, dass der Verbundwerkstoff bis zu 30 Gew.-% eines von dem ersten faserigen Naturstoff verschiedenen zweiten faserigen Materials, insbesondere Kunstfasern, andere Naturfasern, Glasfasern oder Carbonfasern enthält.

Weiterhin ist es vorteilhaft, dass die Faserlänge des zweiten faserigen Materials größer ist als die Faserlänge des ersten faserigen Naturstoffs.

Es ist ebenfalls zweckmäßig, dass der Verbundwerkstoff Füllstoffe und/oder Pigmente und/oder Katalysatoren enthält.

Eine bevorzugte Weiterbildung der Erfindung besteht darin, dass die Pigmente wärmeabsorbierende Pigmente, insbesondere Aluminium- oder Kupferpigmente, oder wärmereflektierende Pigmente, insbesondere Ruß oder andere schwarz pigmentierte Schichten sind.

Bei einer Ausgestaltung der Erfindung ist vorgesehen, dass in dem Verbundwerkstoff durch ein Aufschäumen mit einem Treibmittel oder durch den Einbau von Hohlkugeln, insbesondere aus Glas, Hohlräume ausgebildet sind.

Bei Verwendung eines Schaumbildners bilden sich die Hohlräume bei der Trocknung durch Zerfall des Schaumbildners aus.

Ebenfalls ist erfindungsgemäß vorgesehen, dass Flammschutzmittel, insbesondere anorganische, halogenierte, organische oder anorganische Phosphorverbindungen, stickstoffbasierte Verbindungen; Metalloxide, Metallhydroxide, Metallsalze, Bor- oder Zinkverbindungen oder Siliziumverbindungen, enthalten sind.

Es ist auch vorteilhaft, dass antimikrobielle und Antifouling-Wirkstoffe, Biozide, UV-Absorber oder Konservierungsstoffe, insbesondere Silber, Chitosan oder Borsäure, enthalten sind.

Es ist zweckmäßig, dass der erste faserige Naturstoff ein Naturstoff auf Zellulosebasis, insbesondere Zellulosepulp oder -vlies, Papier, recyceltes Papier, Pappe, recycelte Pappe, Holz oder recyceltes Holz ist.

Es liegt im Rahmen der Erfindung, dass das zweite faserige Material aus Kunstfasern, von dem ersten faserigen Naturstoff unterschiedlichen Naturfasern, Glasfasern oder Carbonfasem besteht und die Faserlänge des zweiten faserigen Materials vorzugsweise größer ist als die des ersten faserigen Materials.

Im Rahmen der Erfindung liegt auch Verwendung des gemäß dem erfindungsgemäßen Verfahren hergestellten Formkörpers als Schallschutz-, Brandschutz- oder Wärmedämmstoff, Leichtbauelement, Putz, Dachbedeckungsmaterial, Wandbaumaterial, Fassaden- oder Bodenplatten, als Wand- und Deckenverkleidungen, auch für Feuchträume, zum Abformen von Schindeln, Ziegeln, Dachplatten, als Trennwand, insbesondere für Büros, Umkleidekabinen und Wohncontainer, zur Schall- und Wärmedämmung von Türen, als Fahrzeugteil, insbesondere als Kotflügel, Motorhaube, Unterbodenverkleidung, Radlaufschalen, Stoßfänger, Armaturenträger, Dachsäulenverkleidung, Türinnenverkleidung, Dachhimmel, Dachaussteifung, Hutablage, Kofferraum- und Motorraumauskleidung, als Motorkapselung, Dämmstoff für Motoren, als Abdeckplatte, als Möbelelement, insbesondere zum Tisch-, Schrank-, und Stuhlbau, in Industrieanlagen sowie zur Trittschalldämmung.

Nachfolgend wird die Erfindung anhand eines Ausführungsbeispiels näher erläutert.

### Beispiel 1:

15 g Kieselsol Levasil 200S/30, Bayer AG werden mit 10 g Tetraethoxysilan (TEOS, Dynasilan A, Evonik Degussa) und 0,1 g Glycidyl-oxypropyl-3-triethoxysilan (GPTES) versetzt und über Nacht gerührt. Danach werden dem Gemisch 20 % Holzfasern zugemischt und homogenisiert. Die Masse wird dann mit 2% Sika Schaumbildner SB 2 (Sika) und mit 1% Vernetzungskatalysator x-add^{®} KR 9006 (NANO-X) versetzt. Das Gemisch wird mittels einer Schaumdosieranlage bzw. einer Schaumpistole geschäumt und direkt in eine Form gebracht und auf 130°C erwärmt. Nach dem Abkühlen wird das Gemisch aus der Form entfernt.

Der so erhaltene Formkörper zeigt eine sehr geringe Wärmeleitfähigkeit und eine hohe mechanische Festigkeit.

Zur Wärmeregulierung des Formkörpers können der Masse vor der Verarbeitung zusätzlich
● 2-10 Gew.-% Glashohlkugeln, z.B. 3M Glasbubbles Typ K1 oder
● 5 Gew.-% Spezialschwarz 100 (Evonik Degussa) oder
● 10 Gew.-% Aluminum-Pigmentpaste STAPA Hydroxal W/WH 24 n.l. (Eckart GmbH & Co. KG),
jeweils bezogen auf das Gesamtgewicht des Formkörpers, zugesetzt werden.

## Patentansprüche

1. Verfahren zum Herstellen eines Formkörpers, **gekennzeichnet durch** die folgenden Verfahrensschritte:
a. Herstellung einer Mischung enthaltend 20 bis 80 Gew.-% eines ersten faserigen Naturstoffs und 10 bis 60 Gew.-% silikatisches Bindemittel, wobei das silikatische Bindemittel aus 90-100 Gew.-% eines Gemisches von 40 bis 95 Gew.-% SiO₂-Partikeln, 5 bis 60 Gew.-% hydrolysiertem Tetraethoxysilan (TEOS) und bis zu 10 Gew.-% Methyltriethoxysilan (MTEOS) besteht, sowie bis zu 30 Gew.-% eines von dem ersten faserigen Naturstoff verschiedenen zweiten faserigen Materials,
b. Zugabe eines Treibmittels, und/oder Zugabe von Hohlkugeln zu der Mischung,
c. Eintrag der Mischung in eine Form, auf eine Oberfläche oder auf ein umlaufendes Band,
d. thermische Behandlung bei Temperaturen von Raumtemperatur bis 400°C, bevorzugt von Raumtemperatur bis 250°C.

2. Verfahren gemäß Anspruch 1, **dadurch gekennzeichnet, dass** nach Schritt c. Druck auf die eingetragene Mischung ausgeübt wird.

3. Verfahren gemäß Anspruch 1, **dadurch gekennzeichnet, dass** nach Schritt d. die Oberfläche des Verbundwerkstoffes mit Klarlack oder Farblack lackiert wird oder mit Papier oder Kunststoffen überlaminiert wird.

4. Verfahren gemäß einem der Ansprüche 1 bis 3, **dadurch gekennzeichnet, dass** die thermische Behandlung mittels IR-Strahlen, Mikrowellenstrahlung, Induktion oder Konduktion erfolgt.

5. Verfahren gemäß einem der Ansprüche 1 bis 4, **dadurch gekennzeichnet, dass** der Schritt d. im Vakuum erfolgt.

6. Verfahren gemäß Anspruch 1, **dadurch gekennzeichnet, dass** der erste faserige Naturstoff ein Naturstoff auf Zellulosebasis, insbesondere Zellulosepulp oder -vlies, Papier, recyceltes Papier, Pappe, recycelte Pappe, Holz oder recyceltes Holz ist.

7. Verfahren gemäß Anspruch 1, **dadurch gekennzeichnet, daß** das zweite faserige Material aus Kunstfasern, von dem ersten faserigen Naturstoff unterschiedlichen Naturfasern, Glasfasern oder Carbonfasem besteht und die Faserlänge des zweiten faserigen Materials vorzugsweise größer ist als die des ersten faserigen Materials.

8. Verwendung des gemäß den Ansprüchen 1 bis 7 hergestellten Formkörpers als Schallschutz-, Brandschutz- oder Wärmedämmstoff, Leichtbauelement, Putz, Dachbedeckungsinaterial, Wandbaumaterial, Fassaden- oder Bodenplatten, als Wand- und Deckenverkleidungen, auch für Feuchträume, zum Abformen von Schindeln, Ziegeln, Dachplatten, als Trennwand, zur Schall- und Wärmedämmung von Türen, als Fahrzeugteil, insbesondere als Kotflügel, Motorhaube, Unterbodenverkleidung, Radlaufschalen, Stoßfänger, Armaturenträger, Dachsäulenverkleidung, Türinnenverkleidung, Dachhimmel, Dachaussteifung, Hutablage, Kofferraum- und Motorraumauskleidung, als Motorkapselung, Dämmstoff. für Motoren, als Abdeckplatte, als Möbelelement, insbesondere zum Tisch-, Schrank-, und Stuhlbau, in Industrieanlagen sowie zur Trittschalldämmung.

## Claims

1. Method for producing a molded body, **characterised by** the following steps:
a. production of a mixture containing 20 to 80 % by weight of a first fibrous natural material and 10 to 60 % by weight of siliceous binder, the siliceous binder consisting of 90 to 100 % by weight of a mixture of 40 to 95 % by weight of Si02 particles, 5 to 60 % by weight of hydrolysed tetraethoxysilane (TEOS) and up to 10 % by weight ofmethyltriethoxysilane (MTEOS), and up to 30 % by weight of a second fibrous material, which differs from the first fibrous material,
b. addition of a blowing agent, and/or addition of hollow balls to the mixture,
c. introduction of the mixture into a mold, onto a surface or onto a revolving belt,
d. thermal treatment at temperatures from room temperature to 400 °C, preferably from room temperature to 250 °C.

2. Method according to claim 1, **characterised in that,** following step c., pressure is applied to the mixture introduced.

3. Method according to claim 1, **characterised in that,** following step d., the surface of the composite material is coated with a varnish or a coloured coating, or overlaminated with paper or plastics.

4. Method according to one of claims I to 3, **characterised in that** the thermal treatment is by means of IR rays, microwave radiation, induction or thermal conduction.

5. Method according to one of claims 1 to 4, **characterised in that** step d. is carried out under vacuum.

6. Method according to claim 1, **characterised in that** the first fibrous natural material is a natural material based on cellulose, in particular cellulose pulp or fleece, paper, recycled paper, cardboard, recycled cardboard, wood or recycled wood.

7. Method according to claim 1, **characterised in that** the second fibrous material consists of synthetic fibres, natural fibres that differ from the first fibrous natural material, glass fibres or carbon fibres, and that the fibre length of the second fibrous material is preferably greater than that of the first fibrous material.

8. Use of the molded body produced according to claims 1 to 7 as soundproofing, fireproofing or thermal insulation material, lightweight construction elements, plaster, roofing material, walling material, facade or floor slabs, wall and ceiling surfacing material, also for damp rooms, for the casting of shingles, roofing tiles and roofing sheets, as partition walls, for the soundproofing and thermal insulation of doors, as vehicle components, notably mudguards, bonnets, underside paneling, wheel arch panels, bumpers, dashboard supports, roof post trim, door trim, roof liners, roof braces, rear shelves, boot liners and soundproofing matting for the engine compartment, as engine/motor enclosures, engine/motor insulation material, cover plates, furniture elements, notably for the construction of tables, cupboards and chairs, in industrial plant and for footfall sound insulation.

## Revendications

1. Procédé pour la fabrication d'un corps moulé, **caractérisé par** les étapes de procédé suivantes :
a) Préparation d'un mélange contenant 20 à 80 % en poids d'un premier produit naturel fibreux et 10 à 60 % en poids d'un liant à base de silicate, le liant à base de silicate se composant de 90 à 100 % en poids d'un mélange de 40 à 95 % en poids de particules de SiO₂, 5 à 60 % en poids de tétraéthoxysilane (TEOS) hydrolysé et jusqu'à 10% en poids de méthyltriéthoxysilane (MTEOS), ainsi que jusqu'à 30 % en poids d'un deuxième matériau naturel fibreux différent du premier,
b) Ajout d'un agent d'expansion et/ou ajout de billes creuses au mélange,
c) Introduction du mélange dans un moule, sur une surface ou sur une bande circulante,
d) Traitement thermique à des températures comprises entre la température ambiante et 400 °C, de préférence comprises entre la température ambiante et 250 °C.

2. Procédé selon la revendication 1, **caractérisé en ce qu'**après l'étape c), une pression est exercée sur le mélange appliqué.

3. Procédé selon la revendication 1, **caractérisé en ce qu'**après l'étape d), la surface du matériau composite est laquée avec du vernis transparent ou du vernis coloré ou elle est surlaminée avec du papier ou une matière plastique.

4. Procédé selon l'une des revendications 1 à 3, **caractérisé en ce que** le traitement thermique est réalisé au moyen de rayonnements IR, de rayonnements par microonde, par induction ou par conduction.

5. Procédé selon l'une des revendications 1 à 4, **caractérisé en ce que** l'étape d) est réalisée sous vide.

6. Procédé selon la revendication 1, **caractérisé en ce que** le premier matériau naturel fibreux est un matériau naturel à base de cellulose, notamment de la pâte cellulosique ou du feutre cellulosique, du papier, du papier recyclé, du carton, du carton recyclé, du bois ou du bois recyclé.

7. Procédé selon la revendication1, **caractérisé en ce que** le deuxième matériau fibreux est constitué de fibres synthétiques, de fibres naturelles différentes du premier matériau naturel fibreux, de fibres de verre ou de fibres de carbone, et la longueur des fibres du deuxième matériau fibreux est de préférence plus grande que celle du premier matériau fibreux.

8. Utilisation du corps moulé fabriqué selon l'une des revendications 1 à 7 comme élément d'insonorisation, élément ignifuge ou élément de protection thermique, comme élément de construction légère, comme enduit, comme matériau de couverture pour toiture, comme matériau de construction de paroi, comme panneaux de façade ou de plancher, comme revêtement de mur ou de plafond, y compris pour les pièces humides, pour mouler des bardeaux, des tuiles, des liteaux, comme paroi de séparation, comme isolant sonore et thermique pour portes, comme pièce de véhicule, notamment comme aile de véhicule, capot, protection de bas de caisse, passage de roue, pare-chocs, support pour tableau de bord, habillage de montants de toit, habillage intérieur de porte, habillage de toit, renfort de toit, plage arrière, revêtement de coffre et du compartiment moteur, enceinte de moteur, isolant pour moteurs, comme dalles de recouvrement, comme élément pour meuble, notamment pour la construction de table, armoire et chaise, dans des installations industrielles ainsi que pour insonoriser les bruits de pas.
